# FASCICULE DE BREVET EUROPEEN

(11) **EP 3 181 494 B1**
(45) Date de publication et mention de la délivrance du brevet: **22.09.2021**
(21) Numéro de dépôt: 16204516.5
(22) Date de dépôt: 15.12.2016
(51) Int. Cl.: B65G 39/06

(54) **CONVOYEUR À BANDE ET PROCÉDÉ DE FABRICATION ASSOCIÉS**
BANDFÖRDERER UND ENTSPRECHENDES HERSTELLUNGSVERFAHREN
CONVEYOR BELT AND METHOD FOR MANUFACTURING

(30) Priorité: 15.12.2015 FR 1562358
(43) Date de publication de la demande: 21.06.2017
(73) Titulaire: Brunone, René, 27950 Saint Marcel (FR)
(72) Inventeur: Brunone, René, 27950 Saint Marcel (FR)
(74) Mandataire: Lavoix

(56) Documents cités:
- EP-A1- 0 590 561
- EP-A1- 1 702 745
- EP-A1- 1 873 110
- EP-A2- 0 671 253
- CA-A1- 2 127 349
- DE-A1- 3 323 421
- GB-A- 725 493
- JP-A- H11 302 746
- JP-A- 2009 018 929
- JP-B2- 3 956 571
- US-A- 1 161 756
- US-A1- 2003 062 248
- US-A1- 2012 037 478

## Description

La présente invention concerne un convoyeur à bande mobile selon le préambule de la revendication 1.

On connait de l'état de la technique des convoyeurs à bande mobile destinés au transport de produit, tels des minerais issus d'une carrière.

Un tel convoyeur comprend classiquement une bande transporteuse et deux rouleaux de retournement. La bande transporteuse présente deux faces dont une face, dite face de transport, est destinée à recevoir des produits transportés par le convoyeur. La bande est repliée en boucle et définit un brin aller, un brin retour et deux extrémités, les extrémités étant engagées autour des rouleaux de retournement.

Un tel convoyeur comprend également des rouleaux aller destinés à supporter le brin aller de la bande. Le brin aller sert à transporter des produits, ceux-ci étant disposés sur la face de transport alors tournée vers le haut du brin aller.

En outre, un tel convoyeur comprend des rouleaux retour destinés à supporter le brin retour, les rouleaux retour étant situés sous le brin retour et en contact avec ledit brin.

Toutefois, dans certains cas et notamment sur des convoyeurs très courts, il n'est pas possible de retourner la bande transporteuse au niveau du brin retour. Par conséquent, la face du brin retour qui se retrouve en contact avec les rouleaux retour est la face de transport.

Ainsi, lorsque les produits transportés salissent la face de transport, les rouleaux retour se retrouvent alors en contact direct avec une face sale. A titre d'illustration, lorsque le produit transporté est très collant, il n'est pas possible de le racler entièrement et une partie de ce produit reste en permanence collée sur la face de transport qui se retrouve en contact direct avec les rouleaux retour. Dans certains cas on observe un important dépôt de produit au bout d'un certain nombre de passages.

Ceci a pour conséquence la formation d'une surépaisseur irrégulière au niveau des rouleaux retour ce qui induit des effets sur le comportement de la bande et en particulier sur la sécurité du convoyeur.

Ainsi, le contact étant irrégulier entre la bande et les rouleaux retour, la bande se déplace de manière aléatoire sur les rouleaux retour. Une autre difficulté apparait lorsque des protections anti-coincement sont installées. En effet, la surépaisseur du produit sur les rouleaux retour soulève la bande et rend la protection inefficace.

On a déjà proposé dans l'état de la technique de garnir les rouleaux retour en y adhérisant une feuille de caoutchouc présentant, par exemple, une basse dureté. Ainsi, au passage de la bande, la feuille de caoutchouc s'écrase sur une partie du rouleau, ce qui limite le dépôt de matière.

Toutefois, une telle solution ne donne pas entière satisfaction. En effet, la souplesse du matériau caoutchouc limite la durée de vie du garnissage au cours des utilisations. De plus, la surface en général rugueuse du caoutchouc se charge de particules et le rouleau se colmate.

CA 2 127 349 A1 décrit un convoyeur selon le préambule de la revendication 1.

Le but de l'invention est de proposer une solution permettant de réduire le dépôt de matière tout en présentant une bonne résistance dans le temps.

A cet effet, l'invention concerne un convoyeur à bande mobile selon la partie caractérisante de la revendication 1.

Suivant des modes particuliers de réalisation, le convoyeur selon l'invention peut comporter les caractéristiques de la revendication 2 et/ou l'une ou plusieurs des caractéristiques suivantes, prises isolément ou suivant toute combinaison techniquement possible :
- le rouleau comprend un corps cylindrique central s'étendant selon la direction transversale, définissant un axe de rotation du rouleau, l'armature centrale étant fixée au corps cylindrique central, et
- le rouleau comprend un axe de rotation s'étendant selon la direction transversale, la couche intermédiaire et la couche extérieure s'étendant circonférentiellement et transversalement sur toute la périphérie de l'axe de rotation et sur toute la longueur du rouleau.

L'invention a également pour objet un procédé de fabrication d'un rouleau d'un convoyeur à bande mobile selon la revendication 3.

Suivant des modes particuliers de réalisation, le procédé selon l'invention peut comprendre les caractéristiques de la revendication 4.

L'invention sera mieux comprise à la lecture de la description qui va suivre, donnée uniquement à titre d'exemple et faite en se référant aux dessins annexés sur lesquels :
- la figure 1 est une vue schématique de profil d'un convoyeur à bande selon l'invention,
- la figure 2 est une vue en coupe selon un plan transversal du convoyeur à bande de la figure 1,
- la figure 3 est une vue en coupe d'un rouleau selon l'invention entrant dans la constitution du convoyeur à bande de la figure 1,
- la figure 4 est une vue en coupe selon un plan transversal d'un rouleau selon l'invention dans un premier mode particulier de réalisation, et
- la figure 5 est une vue en coupe selon un plan transversal d'un rouleau selon l'invention dans un deuxième mode particulier de réalisation.

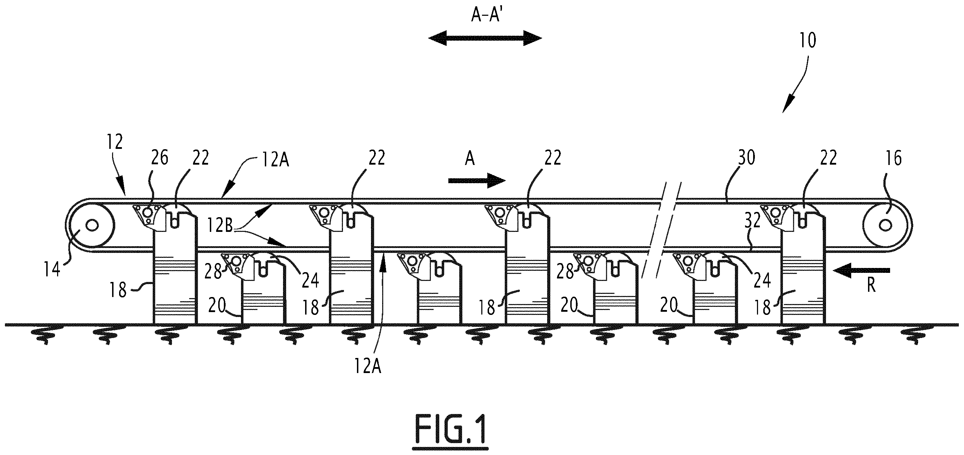

La figure 1 illustre une vue de profil d'un convoyeur à bande mobile 10 selon l'invention s'étendant sensiblement selon une direction longitudinale A-A', le plan de la figure 1 étant formé par la direction longitudinale A-A' et une direction verticale perpendiculaire au sol sur lequel repose le convoyeur 10.

Le convoyeur 10 présente une longueur comprise, par exemple, entre 10 mètres et 50 mètres et est destiné, par exemple, au transport de minerais issus d'une carrière. Il comporte une bande transporteuse 12, deux rouleaux de retournement 14 et 16, des stations de support aller 18, et des stations de support retour 20. Chaque station de support aller 18, respectivement retour 20, comprend des rouleaux aller 22, respectivement retour 24, et typiquement des protections anti-coincement aller 26, respectivement retour 28.

La bande 12 est réalisée en matière caoutchouteuse et comprend, par exemple, un treillis métallique ou en polyamide destiné à améliorer ses caractéristiques mécaniques. La bande 12 présente deux faces 12A et 12B, une des faces, dite face de transport 12A étant destinée à recevoir des produits transportés par le convoyeur 10.

Comme visible sur la figure 1, la bande 12 est repliée en boucle en définissant deux extrémités chacune engagée autour d'un rouleau de retournement 14, 16 respectif.

L'un des rouleaux de retournement 14, appelé tambour, est moteur afin d'assurer l'entraînement de la bande 12, définissant ainsi le côté amont de la bande 12, le côté aval étant situé à l'opposé du côté amont. La boucle est ainsi divisée en un brin aller 30 de transport et un brin retour 32. Les brins aller et retour s'étendent chacun d'un rouleau de retournement à l'autre.

Le brin aller 30 est destiné à transporter les produits. On a représenté sur la figure 1 la direction aller, illustrée par la flèche A, et la direction retour illustrée par la flèche R, les directions aller et retour s'étendant sensiblement selon la direction longitudinale A-A'.

Le produit à transporter est chargé sur la face de transport 12A du brin aller 30 au niveau du côté amont du convoyeur 10. Puis, le produit se déplace selon la direction A pour être déchargé au niveau du côté aval du convoyeur 10.

Le convoyeur 10 ne comporte pas de mécanisme adapté pour retourner la bande 12 lorsqu'elle passe du brin aller 30 au brin retour 32, retourner la bande 12 signifiant inverser l'orientation de ses faces. Ainsi, comme visible sur la figure 1, la face de transport 12A est tournée vers le haut au niveau du brin aller 30 et tournée vers le bas au niveau du brin retour 32, l'expression « tourné vers le bas » signifiant tourné en regard du sol et l'expression « vers le haut » signifiant tourné dans une direction opposée au sol. La face de transport 12A en contact avec les produits au niveau du brin aller 30 est ainsi tournée vers le bas lorsqu'elle est au niveau du brin retour 32.

Avantageusement, le convoyeur 10 comprend un racleur, non représenté sur les figures, installé au niveau d'un des rouleaux de retournement 14, 16 et adapté pour nettoyer la face de transport 12A de la bande 12. A titre d'illustration, lorsque les produits transportés sont très collants, le racleur n'est parfois pas suffisant pour nettoyer complètement la face de transport 12A de la bande 12 salie.

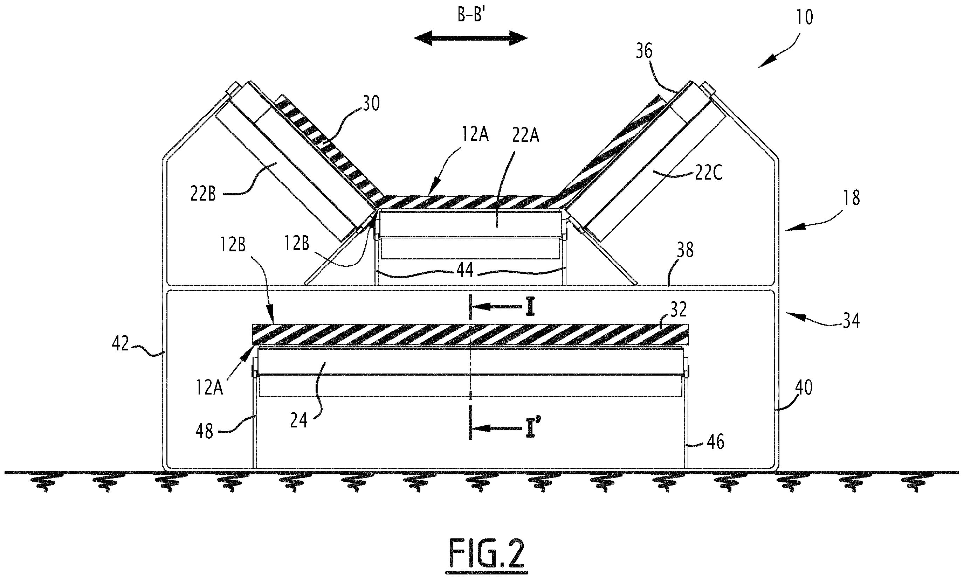

Les stations aller 18 sont destinées à supporter le brin aller 30 de la bande 12. Dans le mode de réalisation illustré par les figures 1 et 2, les stations aller 18 sont toutes identiques et régulièrement espacées.

Dans l'exemple représenté sur la figure 2, chaque station aller 18 comprend un châssis métallique d'appui 34 et un berceau 36 de support et de guidage du brin aller 30 de la bande 12. Le châssis 34 comprend essentiellement une poutre transversale 38 et deux pieds de support aller 40, 42 d'appui sur le sol situés de part et d'autre de la bande 12. Les pieds 40, 42 reposent sur le sol ou, alternativement, sont fixés sur le sol.

La poutre transversale 38 est, par exemple, agencée de telle sorte que le brin retour 32 de la bande 12 passe en dessous de celle-ci.

Le châssis 34 comprend, en outre, deux pattes métalliques 44 de support des rouleaux aller 22. Les pattes 44 sont formées de lames métalliques dont les extrémités sont fixées à la poutre transversale 38 du châssis 34. Chaque patte forme un triangle rectangle. Un rouleau central horizontal aller 22A et deux rouleaux latéraux inclinés aller 22B, 22C sont montés mobiles en rotation entre les pattes de support 44 et les pieds 40, 42 du châssis 34.

Les rouleaux aller 22A, 22B et 22C s'étendent dans un même plan vertical et sont propres à recevoir la bande 12 et à la déformer en forme d'auge. Alternativement, les rouleaux 22 sont positionnés d'une façon différente. Ils sont, par exemple, tous horizontaux de sorte que la bande 12 conserve une configuration plane.

Les stations retour 20 sont destinées à supporter le brin retour 32 de la bande 12 et présentent une hauteur inférieure à celle de la poutre transversale 38. Dans le mode de réalisation particulier illustré par les figures 1 et 2, les stations retour 20 sont toutes identiques et régulièrement espacées.

Dans l'exemple représenté sur la figure 2, chaque station retour 20 comprend deux pieds de support retour 46, 48 d'appui sur le sol, situés de part et d'autre de la bande 12, qui reposent sur le sol ou, alternativement, sont fixés sur le sol.

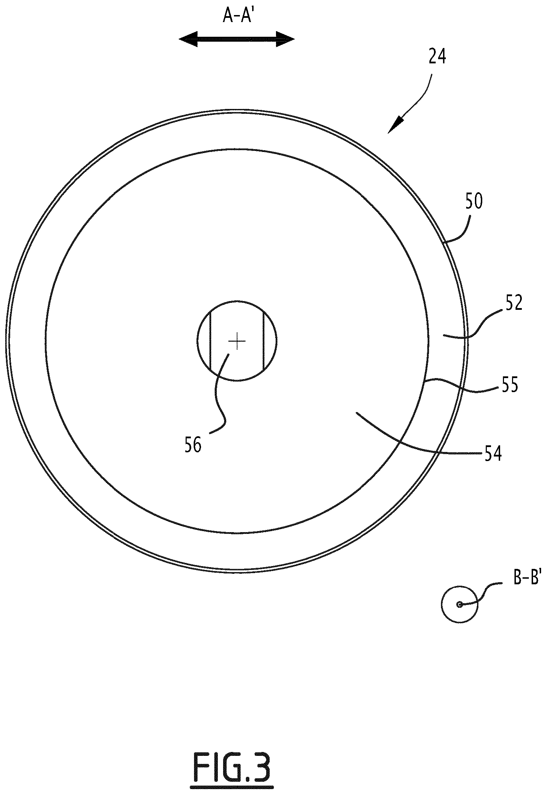

Chaque pied de support retour 46, 48 comprend un orifice, les orifices étant destinés à recevoir un rouleau retour 24 qui est monté mobile en rotation entre les pieds 46, 48. Les rouleaux retour 24 sont situés sous le brin retour 32 et sont en contact avec la face de transport 12A. Ils sont destinés à assurer le déplacement du brin retour 32 depuis le côté aval vers le côté amont du convoyeur 10. En particulier, la face de transport 12A étant en contact direct avec les produits transportés, les rouleaux retour 24 sont également en contact direct avec la face ayant servi à recevoir lesdits produits. Les rouleaux retour 24 seront décrits plus en détail par la suite, en référence à la figure 3.

Les protections anti-coincement aller 26 sont chacune situées du côté amont d'une station de support aller 18 et sont destinées à protéger un utilisateur dont un vêtement, par exemple, est susceptible de se coincer entre un rouleau 22 et le brin aller 30 et ainsi compromettre sa sécurité et celle de l'installation.

De façon analogue, les protections anti-coincement retour 28 sont chacune situées du côté aval d'une station de support retour 20 et sont destinées à contribuer à la sécurité de l'installation et du personnel.

Dans le mode de réalisation illustré par les figures 1 et 2, les protections anti-coincement aller 26 et retour 28 sont identiques et, par la suite, seules les protections anti-coincement retour 28 sont décrites. Alternativement, les protections anti-coincement aller 26 et retour 28 sont différentes et sont, par exemple, adaptées à la dimension des rouleaux aller 22 et retour 24 et/ou à la configuration générale de l'installation.

Les protections anti-coincement retour 28 sont, par exemple, telle que décrites par la demande de brevet FR 2 900 139 A1. En particulier, elles sont destinées à masquer les angles dit rentrants, formés par le brin retour 32 et chaque rouleau retour 24. Chaque protection 28 est fixée à un rouleau retour 24, par exemple au niveau des pieds de support retour 46, 48.

En particulier, comme l'illustre la figure 1, les protections retour 28 sont situées sous le brin retour 32 en regard des rouleaux retour 24 de sorte à être légèrement espacée de la bande 12 et des rouleaux 24. A titre d'illustration, l'espace ménagé entre une protection 28 et la bande 12 est avantageusement compris entre 0 millimètres et 7 millimètres, de l'ordre par exemple de 3 millimètres.

On a représenté sur la figure 3 une vue en coupe selon un plan de coupe I-I' d'un rouleau retour 24 entrant dans la constitution du convoyeur à bande mobile 10 illustré par les figures 1 et 2. Le plan de coupe I-I' est représenté sur la figure 2 et est formé par la direction longitudinale A-A' et par une direction verticale. Dans un mode particulier de réalisation, les rouleaux aller 22 et retour 24 sont identiques ou ne diffèrent que par leurs dimensions respectives. Dans un tel mode de réalisation, la description du rouleau retour 24 illustré par la figure 3 s'applique de façon analogue à un rouleau aller 22.

Comme visible sur la figure 3, le rouleau retour 24 comprend une couche extérieure 50, et une couche intermédiaire 52. Typiquement, le rouleau retour 24 comprend en outre une armature centrale 54 et un corps cylindrique central 56.

Le rouleau retour 24 s'étend selon la direction transversale B-B' correspondant à son axe de rotation, et présente des sections circulaires, les sections étant prises perpendiculairement à la direction transversale B-B'.

Le rouleau retour 24 présente une longueur comprise, par exemple, entre 400 millimètres et 2000 millimètres et un diamètre compris, par exemple, entre 50 millimètres et 300 millimètres.

La couche extérieure 50 s'étend circonférentiellement autour de la direction transversale B-B' et longitudinalement selon cette même direction transversale B-B' et définit toute la surface extérieure du rouleau retour 24.

La couche extérieure 50 présente une première dureté, comprise, par exemple, entre 70 shore et 90 shore, l'échelle de dureté shore mesurant la dureté notamment des élastomères, de certaines matières plastiques ou encore des cuirs. Avantageusement, la couche extérieure 50 présente une dureté égale à 80 shore.

Selon l'invention, la couche extérieure 50 présente une rugosité comprise entre 0,001 millimètres et 0,01 millimètres.

La couche extérieure 50 présente une épaisseur comprise, par exemple, entre 0,5 millimètres et 5 millimètres.

La couche intermédiaire 52 s'étend également circonférentiellement autour de la direction transversale B-B' et longitudinalement selon cette même direction transversale B-B'. En particulier, la couche intermédiaire 52 s'étend sous l'ensemble de la couche extérieure 50. Typiquement, la couche extérieure 50 est directement en contact avec la couche intermédiaire 52, sur toute sa surface.

La couche intermédiaire 52 présente une deuxième dureté inférieure à la première dureté de la couche extérieure 50. La deuxième dureté est comprise, par exemple, entre 30 shore et 50 shore. Avantageusement, la deuxième dureté est égale à 40 shore.

La couche intermédiaire 52 présente une épaisseur comprise, par exemple, entre 5 millimètres et 20 millimètres.

La couche intermédiaire 52 est interposée entre l'armature centrale 54 et la couche extérieure 50, l'armature centrale 54 s'étendant selon une longueur sensiblement égale à la longueur du rouleau retour 24. Elle est destinée à assurer la déformation de la couche 50 sous l'effet de la surépaisseur de produit sur la bande et à éviter ainsi le colmatage du rouleau retour 24. La couche intermédiaire 52 est, par exemple, formée d'un mélange bi-composant, typiquement à base de polyuréthane.

L'armature centrale 54 présente une forme sensiblement cylindrique autour de l'axe de rotation du rouleau retour 24. Elle est délimitée radialement vers l'extérieur par une surface cylindrique 55. Typiquement, la couche intermédiaire 52 est en contact direct avec la surface cylindrique 55 et rigidement fixée à la surface cylindrique 55.

La couche extérieure 50 et la couche intermédiaire 52 forment un garnissage extérieur d'une seule pièce, similaire à une gaine, qui peut être enfilé autour de l'armature centrale 54. Le garnissage extérieur possède un diamètre légèrement inférieur à l'armature 54. De ce fait, l'armature centrale 54 est emmanchée de force et, par conséquent, reste en place sans dispositif particulier.

Le corps cylindrique central 56 s'étend selon la direction transversale B-B' à l'intérieur de l'armature centrale 54 en définissant un axe de rotation du rouleau retour 24.

Dans le mode de réalisation illustré par la figure 3, le corps cylindrique central 56 est plein et formé, par exemple, d'une tige métallique. Comme visible sur la figure 2, la tige présente alors deux extrémités faisant saillie à l'extérieur et de part et d'autre du rouleau retour 24 et adaptées pour assurer la fixation du rouleau retour 24 sur les stations de supports retour 20. Alternativement, le corps cylindrique central 56 est creux et adapté pour recevoir des organes de fixation du rouleau retour 24 sur une station de support retour 20.

Le procédé de fabrication d'un rouleau retour 24 de convoyeur à bande mobile selon l'invention va à présent être décrit. Dans le cas où les rouleaux aller 22 et retour 24 présentent des configurations analogues, le procédé décrit par la suite se transpose à la fabrication d'un rouleau aller 22.

Initialement, un moule présentant une forme cylindrique de révolution autour d'un axe de rotation est fourni. Le moule est, par exemple, réalisé à partir d'un matériau métallique ou autre. Le moule est positionné de sorte que l'axe de révolution soit horizontal.

En outre, le moule est associé à un dispositif de rotation adapté pour effectuer sa mise en rotation. Le dispositif de rotation est, par exemple, pilotés informatiquement ou par intervention humaine.

Puis, la coulée dans le moule d'un premier matériau adapté pour subir une polymérisation est réalisée. La quantité de premier matériau coulé dans le moule est fonction de l'épaisseur finale de la couche extérieure 50 à la fin de la polymérisation.

Le premier matériau est adapté pour présenter, après polymérisation, la première dureté et la rugosité de la couche extérieure 50. Typiquement, le premier matériau contient du polyuréthane dans une composition adaptée pour présenter après polymérisation la première dureté et la rugosité telles que définies précédemment. A titre d'illustration, le premier matériau comprend un mélange bi-composant à base de Polyol SDPflex EC 85A et d'Isocyanate SI 85B.

Le moule est concomitamment mis en rotation par le dispositif de rotation de sorte que le premier matériau subisse une polymérisation simultanément.

Une fois que la polymérisation du premier matériau est terminée, la coulée dans le moule d'un deuxième matériau adapté pour subir une polymérisation est réalisée. La quantité de deuxième matériau coulé dans le moule est fonction de l'épaisseur finale de la couche intermédiaire 52 à la fin de la polymérisation.

Le deuxième matériau est adapté pour présenter, après polymérisation, la deuxième dureté de la couche intermédiaire 52. A cet effet, le deuxième matériau contient du polyuréthane. Typiquement, le deuxième matériau contient du polyuréthane dans une composition adaptée pour présenter après polymérisation la deuxième dureté telle que définie précédemment, la deuxième dureté étant inférieure à la première dureté du premier matériau. A titre d'illustration, le deuxième matériau comprend un mélange bi-composant à base de Polyol SDPflex EC 35A et d'Isocyanate SI 35B.

Le moule est concomitamment mis en rotation par le dispositif de rotation de sorte que le deuxième matériau subisse une polymérisation simultanément.

Enfin, une fois que la polymérisation du deuxième matériau est terminée, le démoulage d'un garnissage extérieur, formé des couches extérieures 50 et 52, est effectué.

Le procédé comprend, en outre, la fourniture de l'armature centrale 54 pour insertion dans le garnissage extérieur obtenu conformément aux étapes décrites précédemment.

Avantageusement, pendant les étapes de polymérisation du premier matériau et du deuxième matériau, le moule est chauffé. A titre d'illustration, durant la polymérisation du premier matériau, le moule est porté à une température comprise, par exemple, entre 30°C et 80°C. Durant la polymérisation du deuxième matériau, le moule est également porté à une température comprise, par exemple, entre 30°C et 80°C.

L'invention qui vient d'être décrite présente un certain nombre d'avantages.

La réalisation d'un rouleau retour 24 comprenant une couche extérieure 50 sensiblement lisse et dure et une couche intermédiaire 52 relativement molle permet de disposer d'un rouleau présentant à la fois une faible rugosité et une bonne résistance tout en présentant de la souplesse.

Ainsi, le rouleau selon l'invention présente une longévité accrue par rapport aux rouleaux connu dans l'état de la technique en raison de la dureté de la couche extérieure 50. En outre, en cas d'efforts trop importants, le rouleau selon l'invention se déforme ce qui contribue à son caractère polyvalent.

Par ailleurs, le dépôt de matière est particulièrement réduit en raison du caractère lisse de la couche extérieure 50 limitant les dépôts de matière dus aux aspérités que présentent en général les rouleaux connus de l'état de la technique. La souplesse de la couche intermédiaire 52 contribue aussi à ce résultat.

Un tel rouleau est également simple à réaliser et peu onéreux. En outre, la composition du premier matériau est adaptée pour que, lorsque la couche extérieure 50 est usée en raison des frottements sur le brin retour 32 sale, une nouvelle couche extérieure puisse être réalisée sur la couche existante, ce qui accroît encore la longévité des rouleaux.

De plus, le garnissage extérieur formé de la couche extérieure 50 et de la couche intermédiaire 52 est simple à être remplacé lorsqu'il est usé.

D'autres modes de réalisation sont possibles.

Selon des variantes de réalisation, le rouleau 24 présente, par exemple, d'autres couches intermédiaires réalisées en des matériaux présentant des duretés et/ou des rugosités différentes afin de bénéficier d'une plus grande palette de sensibilité à l'écrasement et, par conséquent, au colmatage.

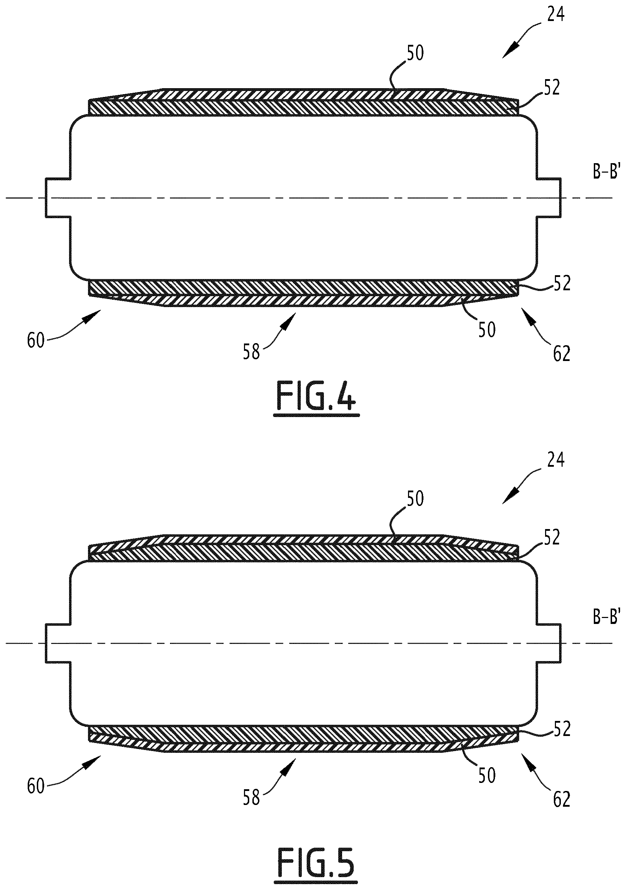

Deux modes particuliers de réalisation sont représentés sur les figures 4 et 5 qui illustrent chacune une coupe selon un plan transversal d'un rouleau 24 selon l'invention, le plan transversal étant perpendiculaire à la direction transversale B-B' correspondant à l'axe de rotation du rouleau 24.

Comme visible sur les figures 4 et 5, le garnissage extérieur, formé par la couche extérieure 50 et la couche intermédiaire 52, présente une structure en forme de gaine bombée.

Le garnissage extérieur comprend un tronçon central 58 et deux tronçons extérieurs 60, 62.

Dans les exemples particuliers des figures 4 et 5, les tronçons extérieurs 60, 62 sont symétriques par rapport au tronçon central 58.

A titre d'illustration, le tronçon central 58 présente une longueur valant 60% de la longueur totale du rouleau 24, et les tronçons extérieurs 60, 62 présentent chacun une longueur valant 20% de la longueur totale du rouleau 24.

Dans l'exemple de la figure 4, l'épaisseur de la couche intermédiaire 52 est constante sur toute la longueur du rouleau 24, c'est-à-dire qu'elle est la même au niveau du tronçon central 58 et des tronçons extérieurs 60, 62.

En revanche, au niveau de chacun des tronçons extérieurs 60, 62, l'épaisseur de la couche extérieure 50 décroit en se rapprochant des extrémités respectives du rouleau 24. En particulier, l'épaisseur de la couche extérieure 50 décroit régulièrement, le long des tronçons extérieurs respectifs 60, 62, depuis la jonction entre le tronçon central 58 et chacun des tronçons extérieurs 60, 62 jusqu'aux extrémités respectives du rouleau 24.

A titre d'exemple, le rapport entre l'épaisseur de la couche extérieure 50 au niveau du tronçon central 58 et l'épaisseur de la couche extérieure 50 au niveau des extrémités des tronçons extérieurs 60, 62 vaut au moins 2.

Dans l'exemple de la figure 5, à l'inverse du mode de réalisation de la figure 4, au niveau de chacun des tronçons extérieurs 60, 62, l'épaisseur de la couche intermédiaire 52 décroit en se rapprochant des extrémités respectives du rouleau 24. En particulier, l'épaisseur de la couche intermédiaire 52 décroit régulièrement, le long des tronçons extérieurs respectifs 60, 62, depuis la jonction entre le tronçon central 58 et chacun des tronçons extérieurs 60, 62 jusqu'aux extrémités respectives du rouleau 24.

En revanche, l'épaisseur de la couche extérieure 50 est constante sur toute la longueur du rouleau 24, c'est-à-dire qu'elle est la même au niveau du tronçon central 58 et des tronçons extérieurs 60, 62.

La forme en gaine bombée permet à la bande 12 de se recentrer à l'endroit où la tension est la plus importante, c'est-à-dire au niveau du tronçon central 58. La forme en gaine bombée permet ainsi d'améliorer le centrage de la bande 12 sur les rouleaux 24.

De fait, disposer d'un garnissage extérieur en forme de gaine bombée combiné avec la présence d'une couche extérieure 50 sensiblement lisse et dure et d'une couche intermédiaire 52 relativement molle permet à la fois de pouvoir mieux guider la bande transporteuse 12 sur le rouleau 24 et de réduire le dépôt de matière, tout en conservant une bonne résistance et une bonne souplesse.

## Revendications

1. Convoyeur à bande mobile (10) comprenant :
- une bande transporteuse (12) présentant deux faces (12A, 12B), une des faces, dite face de transport (12A), étant destinée à recevoir des produits transportés par le convoyeur (10),
- deux rouleaux de retournement (14, 16), la bande (12) étant repliée en boucle et définissant un brin aller (30), un brin retour (32) et deux extrémités, chaque extrémité étant engagée autour d'un rouleau de retournement (14, 16) respectif, le brin aller (30) étant destiné à transporter les produits, la face de transport (12A) au niveau du brin aller (30) étant tournée vers le haut et la face de transport au niveau du brin retour (32) étant tournée vers le bas,
- au moins un rouleau (24) situé sous le brin retour (32), en contact avec la face de transport (12A), et destiné à supporter le brin retour (32),
le rouleau (22, 24) comprenant une couche extérieure (50) prévue pour être en contact avec la bande transporteuse (12) et présentant une première dureté, la couche extérieure (50) comprenant du polyuréthane,
le rouleau comprenant en outre une couche intermédiaire (52) s'étendant sous la couche extérieure (50),
**caractérisé en ce que** la couche intermédiaire (52) présente une deuxième dureté inférieure à la première dureté et la couche extérieure (50) présente une rugosité comprise entre 0,001 millimètres et 0,01 millimètres,
**en ce que** la couche extérieure (50) et la couche intermédiaire (52) forment un garnissage extérieur d'une seule pièce, similaire à une gaine,
**en ce que** le rouleau (22, 24) comprend une armature centrale (54), la couche intermédiaire (52) étant interposée entre l'armature centrale (54) et la couche extérieure (50), et
**en ce que** le garnissage extérieur présente un diamètre légèrement inférieur à l'armature centrale (54) de sorte que l'armature centrale (54) est configurée pour être emmanchée de force dans le garnissage extérieur.

2. Convoyeur à bande mobile (10) selon la revendication 1, dans lequel la couche extérieure (50) du rouleau (22, 24) présente une épaisseur comprise entre 0,5 millimètres et 5 millimètres et dans lequel la couche intermédiaire (52) présente une épaisseur comprise entre 5 millimètres et 20 millimètres.

3. Procédé de fabrication d'un rouleau (22, 24) d'un convoyeur à bande mobile (10) selon la revendication 1 ou 2, le procédé comprenant les étapes suivantes :
- fourniture d'un moule,
- coulée d'un premier matériau, le premier matériau étant adapté pour présenter, après polymérisation, la première dureté et une rugosité déterminée,
- mise en rotation et polymérisation simultanée du premier matériau du moule,
- coulée d'un deuxième matériau, le deuxième matériau étant adapté pour présenter, après polymérisation, la deuxième dureté,
- mise en rotation et polymérisation simultanée du deuxième matériau du moule,
- démoulage d'un garnissage extérieur formé de la couche extérieure (50) et de la couche intermédiaire (52), et
- insertion d'une armature centrale (54) à l'intérieur du garnissage extérieur obtenu après l'étape de démoulage.

4. Procédé selon la revendication 3, dans lequel le premier matériau et le deuxième matériau comprennent chacun du polyuréthane.

## Patentansprüche

1. Förderer mit bewegbarem Band (10), welcher aufweist:
- ein Transportband (12), welches zwei Flächen (12A, 12B) hat, wobei eine der Flächen, welche Transportfläche (12A) genannt wird, dazu bestimmt ist, Produkte aufzunehmen, welche mittels des Förderers (10) transportiert werden,
- zwei Umlenkrollen (14, 16), wobei das Band (12) in eine Schleife gelegt ist und ein Vorlauftrum (30), ein Rücklauftrum (32) und zwei Enden definiert, wobei jedes Ende um eine jeweils zugeordnete Umlenkrolle (14, 16) herum in Eingriff ist, wobei das Vorwärtstrum (30) dazu bestimmt ist, die Produkte zu transportieren, wobei die Transportfläche (12A) auf dem Niveau des Vorlauftrums (30) nach oben gewandt ist und die Transportfläche auf dem Niveau des Rücklauftrums (32) nach unten gewandt ist,
- zumindest eine Rolle (24), welche unter dem Rücklauftrum (32) angeordnet ist, welche in Kontakt mit der Transportfläche (12A) ist und welche dazu bestimmt ist, das Rücklauftrum (32) zu stützen,
wobei die Rolle (22, 24) eine Außenschicht (50) aufweist, welche vorgesehen ist, um in Kontakt mit dem Transportband (12) zu sein, und welche eine erste Härte hat, wobei die Außenschicht (50) Polyurethan aufweist,
wobei die Rolle ferner eine Zwischenschicht (52) aufweist, welche sich unter der Außenschicht (50) erstreckt,
**dadurch gekennzeichnet, dass** die Zwischenschicht (52) eine zweite Härte hat, welche kleiner als die erste Härte ist, und die Außenschicht (50) eine Rauigkeit hat, welche zwischen 0,001 Millimetern und 0,01 Millimetern liegt,
und dadurch, dass die Außenschicht (50) und die Zwischenschicht (52) einen Außenbesatz aus einem einzigen Stück, ähnlich zu einer Hülle, bilden,
und dadurch, dass die Rolle (22, 24) eine zentrale Armierung (54) aufweist, wobei die Zwischenschicht (52) zwischen der zentralen Armierung (54) und der Außenschicht (50) angeordnet ist, und
dadurch, dass der Außenbesatz einen Durchmesser hat, welcher leicht kleiner als die zentrale Armierung (54) ist, sodass die zentrale Armierung (54) eingerichtet ist, um in den Außenbesatz (54) zwangseingesetzt zu sein.

2. Förderer mit bewegbarem Band (10) gemäß Anspruch 1, wobei die Außenschicht (50) der Rolle (22, 24) eine Dicke hat, welche zwischen 0,5 Millimetern und 5 Millimetern liegt, und wobei die Zwischenschicht (52) eine Dicke hat, welche zwischen 5 Millimetern und 20 Millimetern liegt.

3. Verfahren zum Herstellen einer Rolle (22, 24) eines Förderers mit bewegbarem Band (10) gemäß Anspruch 1 oder 2, wobei das Verfahren die folgenden Schritte aufweist:
- Bereitstellen einer Form,
- Gießen eines ersten Materials, wobei das erste Material angepasst ist, um nach dem Polymerisieren die erste Härte und eine vorbestimmte Rauigkeit zu haben,
- In-Drehung-Versetzen und gleichzeitiges Polymerisieren des ersten Materials der Form,
- Gießen eines zweiten Materials, wobei das zweite Material angepasst ist, um nach dem Polymerisieren die zweite Härte zu haben,
- In-Drehung-Versetzen und gleichzeitiges Polymerisieren des zweiten Materials der Form,
- Entformen eines Außenbesatzes, welcher aus der Außenschicht (50) und aus der Zwischenschicht (52) gebildet ist, und
- Einführen einer zentralen Armierung (54) in das Innere des Außenbesatzes, welcher nach dem Schritt des Entformens erhalten wurde.

4. Verfahren gemäß Anspruch 3, wobei das erste Material und das zweite Material jeweils Polyurethan aufweisen.

## Claims

1. A moving belt conveyor (10) comprising:
- a transport belt (12) having two faces (12A, 12B), one of the faces, called the transport face (12A), being intended to receive products transported by the conveyor (10),
- two reversing rollers (14, 16), the belt (12) being curved into a loop defining two ends, each end engaged around a respective reversing roller (14, 16), the forward run (30) being intended to transport products, the transport face (12A) on the forward run (30) being turned upward and the transport face on the return run (32) being turned downwards,
- at least one roller (24) located on the return run (32), in contact with the transport face (12A), and intended to support the return run (32),
the roller (22, 24) comprising an outer layer (50) provided to be in contact with the transport belt (12) and having a first hardness, the outer layer (5) comprising polyurethane,
the roller further comprising an intermediate layer (52) extending under the outer layer (50),
**characterized in that** the intermediate layer (52) has a second hardness less than the first hardness and the outer layer (50) has a roughness of between 0.001 milimeters and 0.01 millimeters,
and **in that** the outer layer (50) and the intermediate layer (52) form an outer lining of a single part, sheath-like,
**in that** the roller (22, 24) comprises a central armature, the intermediate layer (52) being interposed between the central armature (54) and the outer layer (50), and
**in that** the outer lining has a diameter slightly less than the central armature (54) so that the central armature (54) is configured to be force-fitted in the outer lining.

2. A moving belt conveyor (10) according to claim 1, wherein the outer layer (50) of the roller (22, 24) has a thickness of between 0.5 millimeters and 5 millimeters, and wherein the intermediate layer (52) has a thickness of between 5 millimeters and 20 millimeters.

3. A method of manufacturing a roller (22, 24) of a moving conveyor belt (10) according to claim 1 or 2, the method comprising the following steps:
- providing a mold,
- pouring a first material, the first material being adapted to exhibit, after curing, the second hardness,
- simultaneously rotating and curing the first material of the mold,
- pouring a second material, the second material being adapted to exhibit, after curing, the second hardness,
- simultaneously rotating and curing the first material of the mold,
- removing from the mold an outer lining formed of the outer layer (50) and of the intermediate layer (52), and
- inserting a central armature (54) inside the outer lining obtained after the step of removal from the mold.

4. A method according to claim 3, wherein the first material and the second material each comprise polyurethane.
